# EUROPEAN PATENT APPLICATION

(11) **EP 4 494 470 A1**
(43) Date of publication of application: **22.01.2025**
(21) Application number: 23186583.3
(22) Date of filing: 20.07.2023
(51) Int. Cl.: A23C 9/152, A23L 2/66, A23L 33/185, A23L 33/00, A23P 30/30

(54) **PUFFED GRAIN PROTEIN PRODUCT**

(71) Applicant: FrieslandCampina Nederland B.V., 3818 LE Amersfoort (NL)
(72) Inventor: BONGERS, Cornelis Margaretha Theodorus Maria, 6708 WH Wageningen (NL); ADANG, Luuk Willem Joseph, 6708 WH Wageningen (NL)
(74) Representative: FrieslandCampina IP Department

(57) **Abstract**

This invention relates to a process for the preparation of a protein-comprising material. The invention further relates to the use of such protein-comprising material in a food product and to the so-obtained food product. The protein-comprising material is obtained in a process comprising the steps of i. obtaining puffable grain; ii. puffing the grain of step i; iii. milling the puffed grain to obtain a milled puffed grain; iv. enzymatic digesting of the milled puffed grain, preferably enzymatic digesting of carbohydrate material present tin the milled puffed grain, to obtain a protein-comprising material.

## Description

This invention relates to a process for the preparation of a protein-comprising material. The invention further relates to the use of such protein-comprising material in a food product and to the so-obtained food product.

### Technical Background

Breast feeding is the best way to ensure healthy growth and development of infants during the first months of life. It is recommended by the WHO to exclusively provide breast feeding during the first six months of life and the introduction of safe and appropriate complementary feeding thereafter to supplement continued breast feeding up to two years of age or beyond. However, when mothers cannot or choose not to breastfeed for whatever reason a safe alternative to breast feeding is required, there is a legitimate role for breast milk substitutes, produced according to strict international compositional and safety standards.

In Central and South America, Africa, and Asia, several hundred million people rely on maize as their principal daily food, for weaning babies, and for feeding livestock. Unfortunately maize (corn) has two significant flaws; it lacks the full range of amino acids, namely lysine and tryptophan, needed by humans to produce proteins, and has its niacin (vitamin B3) bound in an indigestible complex. In addition diets high in corn produce a condition known as wet-malnutrition - a person is receiving sufficient calories, but her or his body malfunctions due to a lack of protein. A chronic lack of protein in the diet, more precisely a chronic lack of essential amino acids, leads to kwashiorkor (ICD-10 E40), a form of malnutrition. Thus, conventional maize is a poor-quality food staple; unless consumed as part of a varied diet - which is beyond the means of most people in the developing world.

Modified maize with higher lysine and tryptophan level content dates back to the 1920s. The higher lysine and tryptophan levels are caused by the recessive *"opaque-2"* mutation and varieties homozygous for this *opaque-*2 gene variety had been developed in 1963. The *opaque-2* mutation reduces the transcription of lysine-lacking zein-related seed storage proteins and, as a result, increases the abundance of other proteins that are rich in lysine. While its lysine and tryptophan levels were better than those of conventional maize, *opaque-2* varieties had lower yields and a soft, chalky kernel. By the mid-1980 a Quality Protein Maize (QPM) germplasm with hard kernel characteristics and good taste similar to the traditional grain and with much higher levels of lysine and tryptophan had been developed by Surinder Vasal and Evangelina Villegas. QPM is a product of conventional plant breeding (i.e., it is not genetically modified) and an example of biofortification. Quality Protein Maize (QPM) is a family of maize varieties. QPM grain contains nearly twice as much lysine and tryptophan, amino acids that are essential for humans and monogastric animals but are limiting amino acids in grains.

QPM produces 70-100% more of lysine and tryptophan than the most modern varieties of tropical maize. These two amino acids allow the body to manufacture complete proteins, thereby eliminating wet-malnutrition. In addition tryptophan can be converted in the body to Niacin, which theoretically reduces the incidence of Pellagra. So, the total quantity of kernel protein content in both QPM and CM is usually the same. It is only the quantity (percentage share) of the two essential amino acids in the endosperm protein that is enhanced in QPM. Therefore, the nutritional advantage of QPM is due to the increase in protein quality or amino acid balance, but not to the increase in protein quantity.

Popcorn [*Zea mays* L. ssp. *everta* (Sturt.) Zhuk] is a type of flint corn characterized by its ability to expand and form light flakes under heat. Popcorn has been enjoyed as a direct-to-consumer product in the United States for more than a century.

Between 2013 and 2018, 12 Quality Protein Popcorn (QPP) inbreds containing Quality Protein Maize (QPM) i.e. homozygous for the *opaque-2* gene, and popcorn germplasm were produced that maintained puffing while carrying the *opaque-2* allele conferring elevated kernel lysine. This resulted in an healthier snack and a model for mining QPM traits into popcorn. QPP hybrids maintained improved amino acid profiles. The inheritance of the quality protein *opaque-2* allele was monitored using the short sequence repeat (SSR) marker umc1066 and the pop-ability was monitored using the visible over-production of 27-kd γ-zein, as described by L. Parsons *et al* (Parsons L, et al (2020) Production and Selection of Quality Protein Popcorn Hybrids Using a Novel Ranking System and Combining Ability Estimates. Front. Plant Sci. 11:698. doi: 10.3389/fpls.2020.00698).

There is a need for more affordable staple foods that do not cause malnutrition. There is also a need for food with increased levels of essential amino acids such as lysine and tryptophan. Preferably, these foods fit nutritional habits of consumers and are readily acceptable with respect to taste, allergy profile and/or preparation.

All these problems would be partly or completely eliminated or overcome by the claimed invention.

It was found that popping of popcorn in particular from quality protein popcorn, at low heat loads leaves protein bodies intact while the carbohydrate cell wall is expanded. This makes the carbohydrates accessible for enzymatic digestion especially for fermentation while leaving all or at least most of the proteinaceous material intact.

Thus, this invention provides a process of the kind mentioned in the first paragraph, which process is characterized in the claims. The invention further provides the use in a food product of the protein-comprising material as obtained in the process according to the invention and to a food product comprising this protein material.

### Summary of the Invention

In a first aspect the invention relates to process for the preparation of a protein-comprising material comprising the steps of
i. obtaining puffable grain;
ii. puffing the grain of step i.;
iii. milling the puffed grain to obtain a milled puffed grain;
iv. enzymatic digesting of carbohydrate material in the milled puffed grain powder to obtain a solution with dissolved proteins.

In another aspect, the invention relates to the use of the protein-comprising material obtained in the process according to the invention in a food product wherein the food product is comprising a protein component and optionally further comprising a carbohydrate component and/or a fat component.

Further, the invention relates to a food product comprising a protein component and optionally further comprising a carbohydrate component and/or a fat component, wherein the protein-comprising material obtained in the process of the invention provides at least 5 wt% of the protein component in the food or feed product.

### Description of the Figures

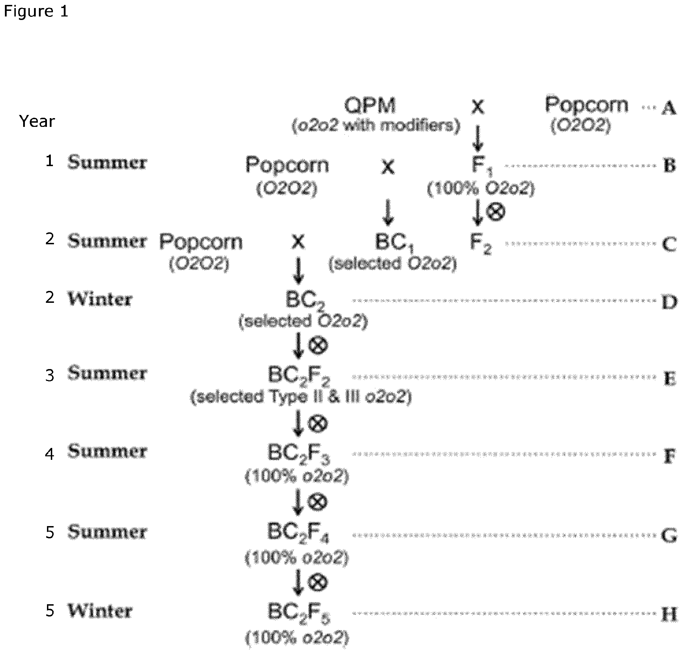

Figure 1: Breeding scheme for obtaining quality protein popcorn as described by Ren et al 2018 (Ren Y, et al (2018) Generation and Evaluation of Modified Opaque-2 Popcorn Suggests a Route to Quality Protein Popcorn. Front. Plant Sci. 9:1803. doi: 10.3389/ fpls.2018.01803 ). A through H represent the steps of
   (A) Selection of Opaque-2 polymorphic markers between QPM and popcorn parental lines; Make F1 crosses uni-directionally using popcorn as male parents.
   (B) Confirm that umc1066 is a co-dominant type of marker that can be used to differentiate O2O2, O2o2, and o2o2 genotypes; Simultaneously self F1 and backcross it to popcorn parental line (recurrent parent) to get F2 population and BC1 population.
   (C) Assess modifier transfer using F2 which segregates 25% o2. Select vitreous popcorn-like kernels to identify o2 mutants by SDS-PAGE and determine whether they can pop at F2 stage.
   (D) Identify BC1 individuals with O2o2 genotype in the BC1 generation; Carry out another generation advancement by backcrossing O2o2 BC1 to popcorn parental lines to get BC2 population.
   (E) Identify BC2 individuals with O2o2 genotype and advance them to BC2F2 population; Select Type II and Type III opaque kernels which are expected to be o2 mutants. Randomly select several such kernels to do both genotyping and SDS-PAGE zein profiling to confirm they are o2 mutants. Self-pollinate selected Type II and Type III opaque kernels to BC2F3 generation.
   (F) Select BC2F3 individuals with complete modification. Carry out genotyping and SDS-PAGE on completely vitreous kernels to verify they are modified o2 mutants. For verified o2 mutants with complete modification, advance by self-pollination to BC2F4 generation.
   (G) Ears were selected by the following two criteria: 1. Ear characteristics similar to popcorn parents. 2. Uniform modification of kernels across the whole ear. Perform amino acid profiling and preliminary puffing analysis on kernels from selected ears.
   (H) Bulk up seeds for formal puffing analysis.

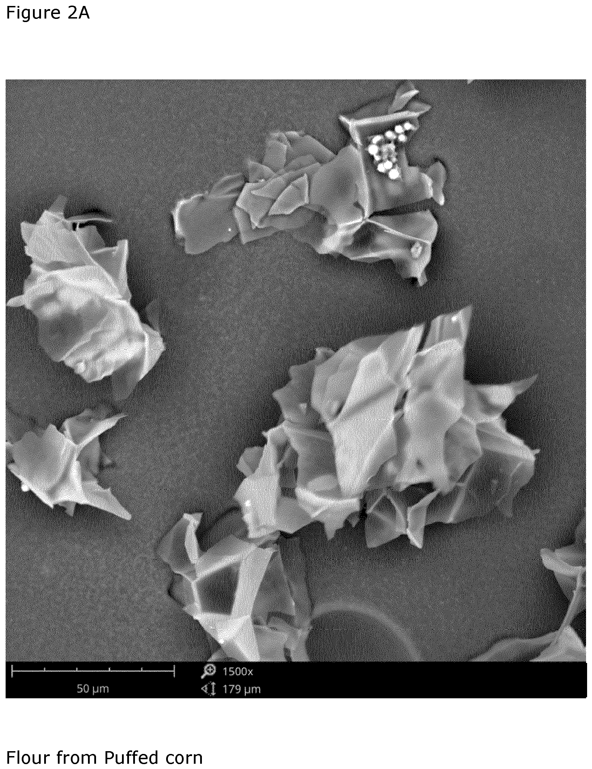

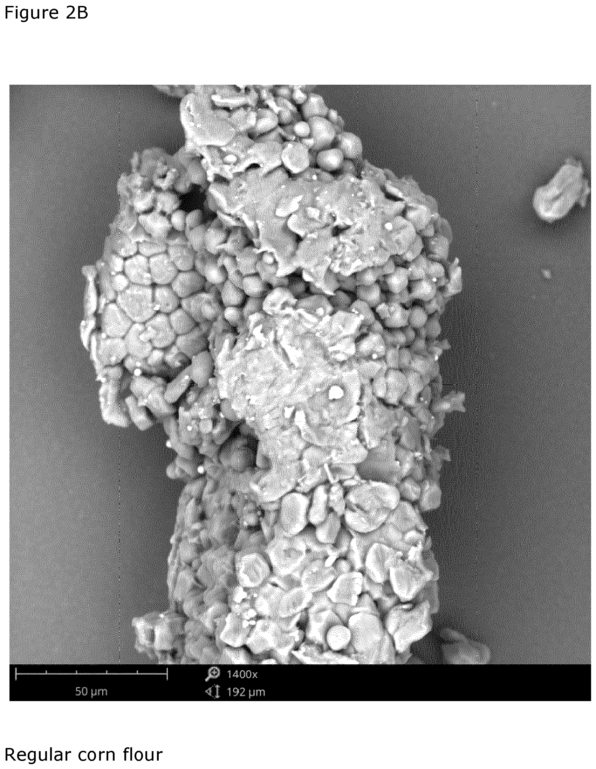

Figure 2. SEM image of popcorn flour (Figure 2A) as obtained in example 3 and of regular corn flour (Figure 2B). The bar in the lower left corner of the each image is 50 µm.

### Details of the Invention

As used herein grains and cereal are synonymous with caryopses, the fruits of the grass family. A cereal is any grass cultivated for the edible components of its grain (botanically, a type of fruit called a caryopsis), composed of the endosperm, germ, and bran. The term may also refer to the resulting grain itself (specifically "cereal grain"). Cereal grain crops are grown in greater quantities and provide more food energy worldwide than any other type of crop and are therefore staple crops. Edible grains from other plant families, such as buckwheat, quinoa and chia, are referred to as pseudo cereals and may also be used in the process of the invention. Cereals include millet, fonio, maize (also referred to as corn), sorghum, barley, oats, rice, rye, spelt, teff, wheat. Preferred cereals include millet, maize, sorghum, barley, oats, rice, rye, spelt, wheat. More preferred cereals include maize, quality protein maize (QPM) being most preferred.

In their natural, unprocessed, whole grain form, cereals are a rich source of vitamins, minerals, carbohydrates, fats, oils, and protein. When processed by the removal of the bran and germ the remaining endosperm is mostly carbohydrate. In some developing countries, grain in the form of rice, wheat, millet, or maize constitutes a majority of daily sustenance. In developed countries, cereal consumption is moderate and varied but still substantial, primarily in the form of refined and processed grains.

In a first aspect the invention relates to process for the preparation of a protein-comprising material comprising the steps of
i. obtaining puffable grain;
ii. puffing the grain of step i.;
iii. milling the puffed grain to obtain a milled puffed grain;
iv. enzymatic digesting of the milled puffed grain, preferably enzymatic digesting of carbohydrate material present in the milled puffed grain, to obtain a protein-comprising material.

Puffing of the seed grains (also referred to as kernels) extremely maximises the surface area of the kernel material, thus increasing the carbohydrate degradability and reducing the relative amount of resistant starch. Puffing may also be referred to as popping. A well-known example of puffing/popping of grain seeds is pop-corn. A further advantage of puffing of the kernels is that the higher surface area allows enzymes to act faster on the puffing kernel material as compared to the intact kernel. Such a higher surface area cannot be obtained by grinding of the kernels. In addition, puffing, especially microwave puffing, exposes the kernels to heat only for a short period of time and puffing i.e. expansion of the kernel rapidly cools down the material, preventing denaturation of the protein and preventing Maillard reactions occurring within the material - or at least minimising such reactions to occur. This is particularly advantageous as Maillard reaction products may render lysine residues unavailable for absorption by humans. So, puffing of the kernels may be done using methods known in the art such as microwave puffing or hot air puffing. It may be done in a batch process, though a continuous process is preferred as it allows for a better control of the puffing conditions, in particular it allows for removal of the popped/puffed kernels from the heat source. Consequently, puffing of the kernels allows for a convenient, low-temperature process which, especially after enzyme treatment of the so-obtained material (i.e. enzymatic digesting of the milled puffed grain, preferably of the carbohydrate material in the milled puffed grain), results in a protein rich material suitable for human consumption. As used herein, the enzyme treatment further increases the bio-availability of the protein material by degrading carbohydrate material like starch. Additionally, the enzyme treatment may partially break down large proteins into smaller protein fragments and/or oligopeptides (i.e. ten or more amino acids). In one embodiment the amount of the protein content of the puffable grain of step i. still present as protein or oligopeptide (i.e. a peptide of 10 amino acids or more) in the solution of dissolved proteins as obtained in step iv is at least 50 wt%, preferably at least 70 wt%, more preferably at least at least 80 wt%, particularly preferably at least 90 wt%, most preferably at least 95 wt%. Flour obtained from the enzyme-treated popped kernels is an easily-digestible food, especially for young and elderly. It is also suitable for people desiring a better protein absorption as compared to consuming flour from non-popped kernel flour. Moreover, it has a neutral / pleasant taste which makes it an easy-to-use protein source as it does not require taste enhancers that mask an unpleasant taste. Additionally, puffed corn flower has the advantage that it uses corn as starting material is bread in many geographical areas and corn flower is used globally in nutritional products. Accordingly, the process, uses and products of the invention can be easily implemented in local agricultural and nutritional habits. In that way the invention contributes to a more sustainable food production.

In one embodiment the process of the invention comprises a further step v. of separating water-insoluble material from the protein-comprising material providing an aqueous solution of the protein-comprising material.

In another embodiment the process of the invention further comprising a step vi. of heating of the protein-comprising material obtained in step iv. or of the aqueous solution obtained in step v, preferably at 63°C for 30 minutes or pasteurizing the solution at 72°C for 15 seconds. Such a pasteurisation eliminates pathogens and increases the shelf life of the product. Alternatively, in yet another embodiment, the heat treatment involves heating to 70°C for at least 1 minute. The heating step is intended to destroy or deactivate microorganisms and enzymes that contribute to food spoilage. Preferably the heat treatment does not increase the material to temperatures above 100 °C, additionally it should not unnecessary expose the material to temperatures above 60°C to avoid formation of Maillard reaction products.

In yet another embodiment, the process of the invention further comprises a step vii. of isolating protein from the protein-comprising material as obtained in anyone of steps iv, v, or vi. In still another embodiment it comprises a further step viii. of drying the protein-comprising material as obtained in anyone of steps iv, v, vi, or vii., preferably via spray drying or freeze drying. In one embodiment it comprises both steps vii. and viii.

The grain in step i. of the process of the invention (i.e. the whole grain) may be selected from one or more of the group consisting of millet, fonio, corn, sorghum, barley, oats, rice, rye, spelt, teff, and wheat. Preferably it is selected from one or more of the group consisting of millet, corn, sorghum, barley, oats, rice, rye, spelt, and wheat; more preferably the grain in step i. comprises more than 90 wt% of maize even more preferably more than 95 wt% maize, most preferably more than 99 wt% maize. In still another embodiment, the grain used in step i. of the process of the invention or any embodiment thereof is maize, preferably wherein the maize is quality protein maize (QPM), preferably quality protein popcorn (QPP).

Popcorn Maize is preferably used because it is readily available on all continents. Additionally it has a relative high protein content. QPP is most preferred because of its high lysine and tryptophan level and because it may be popped/puffed.

In order to adjust the overall amino acid profile of the protein-comprising material a mixture of different grains may be used in step i. of the process of the invention. Alternatively, different puffable grains may be puffed each at its own condition. The different puffed grains may be milled together or alternatively, milled separately and mixed afterwards. In both ways, after step iii. of the process of the invention the milled puffed grain comprises a mixture of milled puffed grains of two or more types of grains. Mixtures of two or more milled puffed grains also allow for a further adjustment of the taste and/or price of the product.

The enzymatic digestion in step iv. of the process of the invention is preferably done using enzymes derived from a mold (fungus) of the genus Aspergillus. These enzymes are capable to ferment different food products in a non-toxic way. Preferably the enzymes are derived from *Aspergillus oryzae,* more preferably the enzymatic digestion is done using shio koji. Shio koji is a *Aspergillus oryzae* - fermented rice mixed with water and salt, which is comprising enzymes from *Aspergillus oryzae* e.g. such as liquid Shio koji from Hanamaruki.

In another embodiment, the enzymatic digestion in step iv. of the process of the invention is first done using amylase and other carbohydrate degrading enzymes preferably derived from a mold (fungus) of the genus Aspergillus, more preferably from *Aspergillus oryzae.* In an optional second digestion step proteases are used optionally in addition to the amylases and other carbohydrate degrading enzymes. This sequential approach allows for a better control of the digestion process.

In a preferred embodiment of the process of the invention the grain in step i. is QPP and wherein the enzymatic digestion in step iv. is done using enzymes derived from Aspergillus oryzae, more preferably using Shio koji, even more preferably using liquid Shio koji.

In another aspect the invention relates to the use of the protein-comprising material obtained in the process of the invention or any embodiment thereof, in a food product wherein the food product is comprising a protein component and optionally further comprising a carbohydrate component and/or a fat component. Preferably, the food product is comprising a protein component, a carbohydrate component and a fat component. The protein-comprising material may be used in any type of food product because it has a neutral taste which is very surprising as plant-based proteins normally have an off-taste that requires masking when the protein material is used in a food product. In one embodiment, the food product may be a product selected from the group consisting of a food supplement, baby food, infant formula, young child formula, adult nutrition product, sports nutrition product and elderly nutrition product. Preferably, the food product is an infant nutrition product or young child formula (also referred to as growing up milk). In another embodiment, the protein material may be used in a protein drink or it may be dried. Preferably the protein in the protein-comprising material as obtained in the process of the invention provides at least 10 wt % of the protein component in the food product. In another embodiment it provides at least 25 wt% of the protein component in the food product. In still another embodiment it provides at least 50 wt% of the protein component in the food product, preferably at least 75wt%, more preferably at least 90 wt%, most preferably at least 95wt% of the protein component in the food product.

As used herein the term "reconstituted beverage" relates to a drinkable product that is prepared by dissolving a powder in a liquid such as dissolving an infant formula in water in accordance with the manufacturer's instructions. The drinkable product preferably is drinkable by an infant using a bottle with a teat. Such bottles with teat are well-known and readily commercially available. The drinkable product preferably has a viscosity of less than 800 cP (at 25 °C and a pressure of 1 atmosphere) such as between 1 and 500 cP, preferably between 1 and 400 cP, more preferably between 1 and 200 cP.

A "formula product" as used herein refers to a product which upon reconstitution with a liquid, preferably with water, more preferably boiled water (which preferably is cooled to below 37 °C), provides a reconstituted drinkable product. Once the reconstituted beverage is consumed, its temperature should not be too high in order to avoid burning of the subject's tongue or mouth. Hence normally the temperature of the liquid should be 37 °C or below.

The formula product usually is a powder, although in some instances it may be a readily dissolvable tablet or cube. Alternatively, a formula product is a liquid which may have to be diluted or is "ready to drink". Examples of formula products include products that, optionally after reconstitution into a reconstituted beverage, provide a complete nutrition for a subject such as IFT products, Follow-on-Formula (FOF), and Young Child Formula (YCF-Jr) products. A formula product has a recommended dosage (i.e. amount) of formula product per subject per day; a recommended number of feeding moments per subject per day and a recommended ratio between the desired amount of the formula product and the desired amount of liquid. These recommendations may depend on the type and brand of formula and are provided by the manufacturer. The term "infant formula", also referred to as "infant formula product" as used herein refers to a nutritional composition intended for infants 0 to 6 months. It refers to a breast-milk substitute specially manufactured to satisfy, by itself, the nutritional requirements of infants during the first months of life up to the introduction of appropriate complementary feeding. The product is so processed and so packaged as to prevent contamination under all normal conditions of handling, storage and distribution. The energy content, carbohydrate content, fat content, and protein content are exemplified elsewhere herein. The composition of the invention compensates the risk of a too high energy intake during the first months of life by a lower energy level as compared to standard dietary recommendations e.g. as defined in the above-cited European Commission Directive, or in Codex Alimentarius, (Codex Alimentarius Standard For Infant Formula And Formulas For Special Medical Purposes Intended For Infants - STAN 72-1981).

The infant formula encompasses the starter infant formulas. Generally a starter formula is for infants from birth to 6 months as breast-milk substitute, and a follow-up or follow-on formula from the 6th month to 12 months. A young child formula, which may also be referred to as Growing Up Milk (GUM)) is dedicated for children aged 1 - 3 years old.

The term "infant" means a child under the age of 12 months.

The term "young child" means a child aged between one and three years. The term "starter infant formula" means a foodstuff intended for particular nutritional use by infants during the first six months of life. The term "nutritional composition" means a composition which nourishes a subject. This nutritional composition is usually to be taken orally, and it usually includes a lipid or fat source, a carbohydrate source and a protein source.

The term "synthetic composition" means a composition which is artificially prepared and is containing at least one compound that is produced ex vivo chemically and/or biologically and/or physically, e.g. by means of chemical reaction, enzymatic reaction or by a fractionation process. An example of such a fractionation process is a process wherein bovine milk is separated into different fractions like a fat and protein fraction. For the avoidance of doubt, a synthetic composition is not made in vivo by man or animal. The product of the invention preferably is a synthetic composition.

As used herein the term "reconstituted beverage" relates to a drinkable product that is prepared by dissolving a powder in a liquid such as dissolving an infant formula in water in accordance with the manufacturer's instructions.

The term "prebiotic" means non-digestible carbohydrates that beneficially affect the host by selectively stimulating the growth and/or the activity of healthy bacteria such as Bifidobacteria in the colon of humans.

The term "probiotic" means microbial cell preparations or components of microbial cells with a beneficial effect on the health or well-being of the host.

In still another aspect, the invention relates to a food product comprising a protein component and optionally further comprising a carbohydrate component and/or a fat component, wherein the protein-comprising material obtained in a process according to the invention or any embodiment thereon provides at least 5 wt% of the protein component in the food product, preferably at least 25wt%, more preferably at least 50 wt%, particularly preferably at least 75 wt% , most preferably at least 95wt%. In one embodiment, the food product is suitable for a vegetarian diet. In another embodiment, the food product is suitable for a vegan diet.

In another embodiment, the food product of the invention is selected from the group consisting of a food supplement, baby food, infant formula, young child formula, adult nutrition product, sports nutrition product and elderly nutrition product, preferably wherein the food product is an infant nutrition product or young child formula (i.e. growing up milk). In yet another embodiment the food product is in solid or liquid form. The food product may be selected from one or more selected from the group consisting of food supplement (e.g. a protein supplement), infant formula (0-12months), follow on formula (6-12 months), growing up milk (GUM) (1 year and older), cheese, yoghurt, desserts (e.g. custard in ready to eat or powder form), protein bars, adult nutrition product, hypoallergenic product and a spoonable product (e.g. high protein spoonable product). In yet another embodiment it may be used to protein-fortify baked products like bread, cookies and the like. In still another embodiment it may be used in a hypoallergenic product. For example in a product without milk protein which is particularly suitable for persons with milk-protein allergy.

In still another embodiment the food product of the invention further comprises milk protein preferably wherein the level of milk protein is between 10 and 90 wt% of the total protein content of the food product; preferably the protein component in the food product of the invention comprises between 20 and 80 wt% milk protein and between 20 and 80 wt% protein material as obtained in the process of the invention. Preferably, the milk protein is bovine milk protein, more preferably it is whey protein, even more preferably bovine whey protein.

In a most preferred embodiment the food product of the invention further comprises milk protein and wherein the level of milk protein is between 10 and 90 wt% of the total protein content of the food product and wherein the milk protein is whey protein.

As shown in the examples, such a product is obtainable by the process of the invention.

It must be noted that, as used in the specification and the appended claims, the singular form "a", "an," and "the" comprise plural referents unless the context clearly indicates otherwise. For example, reference to a component in the singular is intended to comprise a plurality of components.

It will be understood that within this disclosure, any reference to a weight, weight ratio, and the like pertains to the dry matter, in particular the dry matter of the composition, unless defined otherwise.

Unless defined otherwise, all technical and scientific terms used herein generally have the same meaning as commonly understood by one of ordinary skill in the art to which this invention belongs.

To the extent that the term "includes" or "including" is used in the description or the claims, it is intended to be inclusive of additional elements or steps, in a manner similar to the term "comprising" as that term is interpreted when employed as a transitional word in a claim.

As used herein, the term "comprising", which is synonymous with "including" or "containing", is open-ended, and does not exclude additional, unrecited element(s), ingredient(s) or method step(s), whereas the term "consisting of" is a closed term, which excludes any additional element, step, or ingredient which is not explicitly recited. Furthermore, to the extent that the term "or" is employed (e.g., A or B), it is intended to mean "A or B or both." When the "only A or B but not both" is intended, then the term "only A or B but not both" is employed. Thus, use of the term "or" herein is the inclusive, and not the exclusive use. When the term "and" as well as "or" are used together, as in "A and/or B" this indicates A or B as well as A and B.

Throughout this application, where publications are referenced, the disclosures of these publications in their entireties are hereby incorporated by reference into this application to more fully describe the state of the art to which this invention pertains.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies, mutatis mutandis, to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described herein, as specific components and/or conditions may, of course, vary. Furthermore, the terminology used herein is used only for the purpose of describing particular embodiments of the present invention and is not intended to be limiting in any way.

The invention is hereinafter illustrated with reference to the following, non-limiting, examples.

### Examples

### Example 1 Quality Protein Popcorn

### Puffable maize, popcorn

Popcorn varieties i.e. puffable maize varieties, are readily commercially available for example from Urban Farmer or Heirloom Popcorn Seed company; e.g. via https://www.ufseeds.com/ under product/r400-popcorn-f1-corn-seed/COR400.html. Or at https://www.welkoop.nl/ under hortitops-pofmais-zea-mays-popcorn-plomyk-type-peppi-mais-5gram_1190051.

### Quality protein maize (QPM)

Quality protein maize (QPM) describes a range of maize cultivars with twice the content of limiting amino acids lysine and tryptophan as compared to conventional maize, and has been developed to help reduce human malnutrition in areas where protein deficiency is prevalent and where maize is the major protein source in the diet, as in various parts of Sub-Saharan Africa (SSA). The International Maize and Wheat Improvement Center (CIMMYT), in collaboration with the International Institute of Tropical Agriculture (IITA) and the National Agricultural Research Systems (NARS) in 17 countries of SSA, has developed a broad range of QPM cultivars responding to the needs of different countries and agroecological zones. Commercial QPM seed is currently available in all collaborating countries and, based on average 2003-2005 annual seed production, approximately 200,000 hectares of land are being planted with QPM cultivars. The genetics for QPM can easily be transferred to other maize varieties. (Krivanek et al. African Journal of Biotechnology Vol. 6 (4), pp. 312-324, 19 February, 2007).

Alternatively, opaque 2 mutant seeds are available at the Maize Genetics Cooperation Stock Center (stock number 701D o2^B73) and sequence data of the opaque 2 gene may be obtained from Gramene database or Genbank/EMBL as specified by Zhan et al (Zhan et al, The Plant Cell, Vol. 30: 2425-2446, October 2018).

### Breeding: generation of opaque-2 popcorn

QPM (Quality Protein Maize) is a dent corn variety carrying the *opaque-2* (o2) mutation, specifying increased amounts of normally limiting essential amino acids, and modifier genes which restore the wild type vitreous kernel phenotype. The *opaque-2* (o2) mutation can be introgressed and selected for endosperm-modification using vitreousness and high 27-kD gamma zein content. In this way, high-lysine in fully puffable Quality Protein Popcorn (QPP) may be recovered. BC2F4 individuals with vitreous kernels can be confirmed to be o2 mutants by both genotyping and SDSPAGE. Amino acid profiling of BC2F4 individuals show that they all have significantly increased lysine compared with popcorn parental lines. Principal Component Analysis of the amino acid profiles shows that all introgressions were grouped with corresponding QPM parental lines. Puffing analysis of the BC2F5 individuals shows that while there is variability in puffing volume between lines, some lines show equivalent puffing to the popcorn parent. It is possible to rapidly recover sufficient popcorn characteristics in a modified o2 background using simple phenotypic, biochemical and genetic selection. Furthermore, this shows increased g-zein is an acceptable substitute for a-zein for full poppability, as described by L. Parsons *et al* (Parsons L, et al (2020) Production and Selection of Quality Protein Popcorn Hybrids Using a Novel Ranking System and Combining Ability Estimates. Front. Plant Sci. 11:698. doi: 10.3389/fpls.2020.00698) and Ren Y, et al (Ren et al (2018) Generation and Evaluation of Modified Opaque-2 Popcorn Suggests a Route to Quality Protein Popcorn. Front. Plant Sci. 9:1803. doi: 10.3389/ fpls.2018.01803. ). The breeding scheme for obtaining QPP is shown in Figure 1.

The strategy outlined here for introgression of dent corn traits into popcorn backgrounds brings together selection for QPM (o2 and modifier genes) and for popcorn characteristics (cross-incompatibility conferred by Ga1-s, kernel shape, high proportion of vitreous endosperm), resulting in development of QPP.

Six BC2F4 introgressions between three QPMs and four popcorn parents, all carrying the homozygous o2 allele, give excellent scope for QPP hybrid production. These BC2F4 introgressions may be obtained following the procedure as described by Ren at al 2018 (Ren Y, et al (2018) Generation and Evaluation of Modified Opaque-2 Popcorn Suggests a Route to Quality Protein Popcorn. Front. Plant Sci. 9:1803. doi: 10.3389/fpls.2018.01803 ).

### Total Zein Extraction

Zeins and non-zeins are extracted according to an established method. Briefly, eight random kernels are selected from a hybrid to be analysed that the proteome is that of QPM (low α-zeins and high 27-kD γ-zein). Kernels for analysis are ground into flour. Equal amounts of raw kernel flour is introduced to a borate extraction buffer and the protein supernatant is extracted. Zein and non-zein fractions are separated by adding 70% ethanol and incubating overnight. The soluble zein and non-soluble non-zein fractions from identical amounts of flour are separated and proteins are profiled using acrylamide SDS-PAGE (Parsons L, et al (2021) Final Selection of Quality Protein Popcorn Hybrids. Front. Plant Sci. 12:658456. doi: 10.3389/fpls.2021.658456).

### DNA Isolation/Extraction

Leaf tissue is collected from individuals in backcrossing generations (BC1 and BC2) for DNA extraction. DNA extraction may be carried out using a BioSprint 96 workstation from Qiagen according to the user manual. Genotyping Using o2 in-gene Marker umc1066 Polymerase Chain Reaction (PCR) is carried out in 20 ml volume consisting of NEB Taq 0.15 ml, 0.2 mM dNTPs, 2 ml standard Taq Reaction Buffer (10), 0.2 mM forward/reverse primer of umc1066, template DNA 50 ng. PCR procedure is as follows: initial denaturation at 94 C for 4 min followed by 35 cycles of three steps including 94 C for 30 s, 57 C for 60 s, 72 C for 60 s. Final elongation was done at 72 C for 10 min. PCR products are visualized on 34% agarose gels. Individuals with O2o2 genotype are selected in backcrossing generations. This is also used for confirmation of o2 mutants in later generations (BC2F2, BC2F3, and BC2F4).

### Evaluation and Selection of Endosperm Modification

Kernels are put embryo side down on a light box. Based on visual estimation of the opaque endosperm proportion, kernels are classified into five types with Type I being fully vitreous, Type II being 25% opaque, Type III being 50% opaque, Type IV being 75% opaque and Type V being fully opaque.

### Amino Acid Profiling

Samples for amino acids profiling analysis are ground together into a fine flour. Free amino acids (FAA) are extracted from 6 to 7 mg of the flour pooled from 3 kernels of 3 QPM lines, 4 popcorn lines and the six BC2F4 introgressions, while protein-bound amino acids (PBAA) are extracted from 3 to 4 mg. FAA are extracted and analysed using methods known in the art e.g. using a LC-MS/MS system. For the analysis of protein-bound amino acids (PBAA), acid hydrolysis is performed prior to the FAA extraction and LC-MS/MS. Briefly, 200 ml of 6N HCl is added to 4 mg of flour and incubated for 24 h at 110 C. Ten micro litres (10 ml) is taken from the hydrolysed samples and dried before resuspension in the FAA extraction buffer and further analysed.

### Quantitative Measurements of Pop Volume

BC2F5 samples along with corresponding popcorn parents are prepared and adjusted to same moisture content for quantitative puffing. After puffing treatment in a Hot Air Popcorn Popper, a 200 ml cylinder is used to measure the total volume.

### Total Protein Extraction and Relative Quantification

Total protein extract (as described in Total Zein Extraction) from 50 mg kernel flour is diluted 250 times and 25 ml of the diluted solution is used for Bicinchoninic Acid (BCA) protein assay. Protein concentration was assessed by the BCA assay kit (Pierce) according to the user's manual. Absorbances at (OD = 562 nm) are measured. Protein concentrations are determined from the BSA standard curve. Protein concentrations are compared between BC2F4 QPP introgressions with corresponding popcorn parents.

Ren Y, et al (2018) Generation and Evaluation of Modified Opaque-2 Popcorn Suggests a Route to Quality Protein Popcorn. Front. Plant Sci. 9:1803. doi: 10.3389/fpls.2018.01803

### Example 2 Popping of maize grains

Puffing of maize grains, which may also be referred to as popping/puffing of maize kernels or corn kernels was done using known methods to initiate the puffing of the grains: using microwave puffing and hot-air puffing. Preferably microwave puffing was used as it delivered a standardized heat capacity and was relatively easily as compared to hot-air puffing. In addition, microwave puffing causes a shorter exposure of the maize kernels to heat thereby reducing the amount of blocked lysine caused by Maillard reaction. Conditions used for puffing of maize were: Maize kernels (50 g) were put in a paper bag or in a microwave bowl covered with a suitable lid. The microwave (normal kitchen microwave) was set at maximum power of 600 Watt. After 15-20 seconds the kernels started to pop. The microwave was stopped when "pops" were longer than 2 seconds apart (at around 3.50 minutes). Burning of popcorn was prevented by stopping the microwave when puffing slowed down. After puffing, popped kernels were allowed to cool to room temperature and non-popped kernels were removed before further processing of the popped kernels.

### Example 3 Milling of popped kernels

The popped kernels were blended in a kitchen blender at medium speed until a homogeneously-sized flour was obtained. This blended popcorn flour was compared with regular corn flour using Scanning Electron Microscopy (SEM), as illustrated in Figure 2A and B. Popcorn flour particles had a much smaller particle size as compared to regular corn flour (less than 30% of the regular corn flour size). The SEM images showed that regular corn flour has intact protein bodies, while the protein bodies in popcorn flour no longer exist. The density of the popcorn flour was 58 kg/m³, the density of the regular corn flour was 567 kg/m³.

Scanning electron microscope (SEM) imaging showed (partially) intact protein bodies. The imaging was performed on a Phenom ProX generation 5. Figure 2A Scale bar: 50 µm; and Figure 2B Scale bar: 50 µm. The particles were found to contain nitrogen by elemental analysis using the Energy-dispersive X-ray detector. The presence of nitrogen indicated the presence of protein material.

### Example 4 Enzyme treatment

The flour as obtained in Example 3 was mixed with enzyme-containing water (1 : 6; wt flour/wt water). The enzyme-containing water contained Shio Koji (0.28 g per 100 ml water) as specified in Table 1. Shio Koji was obtained from a local supermarket. It is rich in protease enzymes (which break down proteins) and amylase enzymes (which break down starches).

**Table 1: Enzyme mixture used during the experiments**

| **Enzyme mix** | **Enzymes** | **Amounts (per 100 ml water)** |
|---|---|---|
| **Shio Koji** | Shio Koji | 0.28 g |

The slurry was then incubated in the dark at room temperature (21 °C) for 3 hours. After incubation, the slurry was blended 2 times for 10 seconds at medium speed using the same blender as in example 3.

Afterwards, the slurry was first sieved with a coarse sieve (mesh size 1 mm) and then with a second sieve (mesh size 0.075 mm). The moisture was manually pushed out of the filter with a spoon to obtain the base suspension filtrate.

The base suspension filtrate after Shio Koji treatment had a Dry mass (DM%) of 14.2%, a pH of 5.87 and a Brix of 11.4.

This suspension was converted into a dried powder by freeze drying.

SEM (Scanning Electron Microscopy) analysis showed the presence of intact protein bodies in the freeze-dried material (i.e. after microwave puffing, freeze-drying). Even after the enzymatic treatment the protein bodies were still partly intact indicating the existence of non-glycated material within the protein bodies. The protein bodies were identified by determining the nitrogen level at specific locations in the sample.

The nutritional value was determined as shown in Table 2 and compared with skimmed milk powder (SMP):

**Table 2: Nutritional specifications of the dried base suspension powder and skimmed milk powder per 100 grams of powder.**

| **Ingredient** (Per 100g powder) | | **Dried base of the invention** | **Skimmed Milk Powder**** |
|---|---|---|---|
| Energy (kcal) | | 370 | 349 |
| Carbohydrates (g) | | 75 | 50.5 |
| | of which sugar (g) | 5 | 50.5 |
| Dietary fibre (g) | | 1 | 0 |
| Fat (g) | | 4 | 0.6 |
| | of which saturated (g) | 1 | 0.4 |
| Protein (g) | | 10 | 35.4 |
| | Lysine (g)* | | |
| | Tryptophan (g)* | | |
| Salt (g) | | 0 | 1.25 |

| | | | |
|---|---|---|---|
| * Calculated based on the lysine and tryptophan level in the original material; ** average reference value | | | |

The salt level of the powder is very low, which makes the product an ideal protein source in a low-salt diet.

Alternatively the suspension was converted into a protein drink with the addition of a limited number of additional non-protein ingredients as given in Table 3.

**Table 3: Ingredients added to the base suspension to create a protein drink**

| **Ingredient %** | **(w/w)** |
|---|---|
| Corn oil | 2.0 |
| Granulated sugar | 1.5 |
| Vanilla aroma | 1.0 |
| Salt | 0.05 |
| (optional) Sweet whey | 0.4 |

The taste of the so-obtained protein drink was considered neutral, as determined by a taste panel in both Europe and Asia. The nutrient level of this protein drink was determined as shown in Table 5:

### Example 5 Protein product from Quality Protein Maize

Starting from Quality Protein Popcorn (QPP) as may be obtained following example 1 and preparing a dried protein powder or protein drink from QPP following the procedure of example 2-4, a plant-based protein source may be obtained which is enriched in lysine and tryptophan. Such protein drink or dried product may be used in other food applications which may be in solid or liquid form; they may be selected from one or more selected from the group consisting of infant formula, growing up milk (GUM), cheese, yoghurt, desserts (e.g. custard in ready to eat or powder form), protein bars, adult nutrition product, and protein supplement. Especially when considering the level of lysine and tryptophan, as illustrated in Table 4.

**Table 4: Corn nutritional data, including Lysine and tryptophan levels as percentages of total protein in whole grain flour of conventional (CM) and QPM (o2o2) genotypes.**

| **Traits** | **CM** | **QPM /QPP** |
|---|---|---|
| Carbohydrate (wt%) | 78 | 78 |
| Fiber (wt%) | 2 | 2 |
| Fat (wt%) | 6 | 6 |
| Protein (wt%) | > 8 | > 8 |
| Lysine in endosperm (% of total protein) | 1.6-2.6 (mean 2.0) | 2.7-4.5 (mean 4.0) |
| Tryptophan in endosperm (% of total protein) | 0.2-0.6 (mean 0.4) | 0.5-1.1 (mean 0.8) |

No differences in average energy, carbohydrate, fat or protein contents have been reported between CM and QPM or QPP. The only difference is the level of essential amino acids lysine and tryptophan being doubled in QPM/ QPP as compared to CM.

**Table 5: Nutritional specifications of the protein drink, skimmed milk, and soy drink.**

| **Ingredient** | **Protein drink of Example 4** | | **Protein powder of Example 4** | | **Semi Skimmed milk (reference values)*** | **Soy drink**** |
|---|---|---|---|---|---|---|
| | **Per 100 g drink** | | **100 g dry material** | | **Per 100 g product** | **Per 100 g product** |
| **%dm** | **14.66** | | **85** | | | |
| Energy (kcal) | 62 | | 370 | | 47 | 42.1 |
| Carbohydrates (g) | 12 | | 75 | | 4.8 | 2.3 |
| Dietary fibre (g) | 0 | | 1 | | 0 | 0 |
| Fat (g) | 0.6 | | 4 | | 1.5 | 2.2 |
| Of which Saturated (g) | 0 | | 1 | | 1.0 | 0.3 |
| Protein | 1.7 | | 10 | | 3.5 | 3.0 |
| Lys (g) ** | CM | 0.034 | CM | 0.2 | 0.27 | 0.19 |
| | QPP | 0.068 | QPP | 0.2 | | |
| Tyr (g) ** | CM | 0.007 | CM | 0.04 | 0.05 | 0.04 |
| | QPP | 0.014 | QPP | 0.04 | | |

| | | | | | | |
|---|---|---|---|---|---|---|
| * derived from CM Singh-Povel et al. 2022, Public Health Nutrition doi:10.1017/S1368980022000453.** as calculated | | | | | | |

## Claims

1. Process for the preparation of a protein-comprising material comprising the steps of
i. obtaining puffable grain;
ii. puffing the grain of step i;
iii. milling the puffed grain to obtain a milled puffed grain;
iv. enzymatic digesting of the milled puffed grain, preferably enzymatic digesting of carbohydrate material present in the milled puffed grain, to obtain a protein-comprising material.

2. The process of claim 1 further comprising a step of
v. separating water-insoluble material from the protein-comprising material providing an aqueous solution of the protein-comprising material.

3. The process of claim 1 or 2 further comprising a step of
vi. heating of the protein-comprising material obtained in step iv. or of the aqueous solution obtained in step v.

4. The process of any of the preceding claims further comprising a step of
vii. isolating protein from the protein-comprising material as obtained in anyone of steps iv, v, or vi; and/or
viii. drying the protein-comprising material as obtained in anyone of steps iv, v, vi, or vii., preferably via spray drying or freeze drying.

5. The process of any of the preceding claims wherein the grain in step i. is selected from one or more of the group consisting of millet, fonio, corn, sorghum, barley, oats, rice, rye, spelt, teff, and wheat.

6. The process of any of the preceding claims wherein the grain is maize, preferably wherein the maize is quality protein maize (QPM), preferably quality protein popcorn (QPP).

7. The process of any of the preceding claims wherein in step i. a mixture of different grains is obtained and/or wherein in step iii. the milled puffed grain comprises a mixture of milled puffed grains of two or more types of grains.

8. The process of any of the preceding claims wherein the enzymatic digestion in step iv. is done using enzymes derived from a mold of the genus Aspergillus, preferably from *Aspergillus oryzae.*

9. The process of any of the preceding claims wherein the grain in step i. is QPP and wherein the enzymatic digestion in step iv. is done using enzymes derived from *Aspergillus oryzae.*

10. Use of the protein-comprising material obtained in any of the preceding claims in a food product wherein the food product is comprising a protein component and optionally further comprising a carbohydrate component and/or a fat component.

11. Use of claim 10 wherein the food product is selected from the group consisting of a food supplement, baby food, infant formula, young child formula, adult nutrition product, sports nutrition product and elderly nutrition product.

12. Use of claim 11 wherein the food product is an infant nutrition product or young child formula.

13. Use of anyone of claims 10 to 12 wherein the protein in the protein-comprising material obtained in anyone of claims 1 to 9 provides at least 50 wt% of the protein component in the food product, preferably at least 75wt%, more preferably at least 90%, most preferably at least 95wt%.

14. Food product comprising a protein component and optionally further comprising a carbohydrate component and/or a fat component, wherein the protein-comprising material obtained in anyone of claims 1 to 9 provides at least 5 wt% of the protein component in the food product, preferably at least 25wt%.

15. The food product of claim 14 wherein the food product is selected from one or more selected from the group consisting of food supplement (e.g. a protein supplement), infant formula, follow on formula, growing up milk (GUM), cheese, yoghurt, desserts, protein bars, adult nutrition product, hypoallergenic product and a spoonable product.

16. The food product of claim 14 or 15 further comprising milk protein preferably wherein the level of milk protein is between 10 and 90 wt% of the total protein content of the food product; more preferably wherein the milk protein is whey protein.
